# EUROPEAN PATENT SPECIFICATION

(11) **EP 1 355 998 B1**
(45) Date of publication and mention of the grant of the patent: **05.04.2006**
(21) Application number: 02707679.3
(22) Date of filing: 01.02.2002
(51) Int. Cl.: C09D 11/00

(54) **INK COMPOSITIONS COMPRISING SALTS WITH POLYVALENT IONS**
TINTENZUSAMMENSETZUNG ENTHALTEND SALZE VON POLYVALENTEN IONEN
COMPOSITIONS D'ENCRE CONTENANT DES SELS DOTES D'IONS POLYVALENTS

(30) Priority: 02.02.2001 US 266397 P
(43) Date of publication of application: 29.10.2003
(73) Proprietor: CABOT CORPORATION, Boston, Massachusetts 02210-2019 (US)
(72) Inventor: ADAMS, Curtis, E., Watertown, MA 02472 (US)
(74) Representative: Trueman, Lucy Petra
(86) International application number: PCT/US2002/003078
(87) International publication number: WO 2002/062906

(56) References cited:
- EP-A- 1 122 286
- WO-A-01/51566
- WO-A-96/18695
- US-A- 6 153 001
- DATABASE WPI Section Ch, Week 200135 Derwent Publications Ltd., London, GB; Class G02, AN 2001-331082 XP002202552 & JP 2000 345085 A (SEIKO EPSON CORP), 12 December 2000 (2000-12-12)

## Description

### BACKGROUND OF THE INVENTION

### 1. Field of the Invention.

The present invention relates to ink compositions comprising a liquid vehicle, at least one modified pigment comprising a pigment having attached at least one organic functional group, at least one salt having a polyvalent ion, and at least one polymer.

### 2. Description of the Related Art.

Ink compositions can be categorized into various classifications. Examples include printing inks, ultraviolet cure inks, ball-point pen inks, and stamp pad or marking inks. In general, an ink composition consists of a vehicle functioning as a carrier, a colorant such as a dye or pigment, and additives and/or cosolvents to adjust ink performance.

The use of pigments, particularly modified pigments, as colorants in aqueous and non-aqueous ink compositions is becoming more well known as the dispersibility and dispersion stability of these ink compositions has improved. Pigments offer several advantages over soluble dyes, including improved waterfastness and greater light stability. Aqueous and non-aqueous ink compositions comprising examples of modified pigments have been described in U.S. Patent Nos. 5,571,311, 5,713,988, 5,672,198, and 5,707,432, as well as PCT Publication WO99/51690, the specifications of which are all incorporated in their entirety herein by reference.

The use of polyvalent metals in ink jet applications has been described in, for example, U.S. Patent Nos. 5,373,045, 5,180,774, and 5,498,661, European Patent Nos. 867484 and 900831, and JP10046077A2, JP63227674A2, JP63056578A2, JP62215673A2. However, various techniques are required in order to prevent the destabilization and flocculation of the pigment colorant dispersions. For example, the metal ion is held separately from the colorant portion of the ink, either in a separate ink composition or as a component of the substrate to be printed on. These approaches avoid viscosity build and loss of colloidal stability that can result from the presence of the polyvalent ion in the fully formulated ink.

Although improved ink compositions, particularly ink jet ink compositions, are becoming more available as the state of the art progresses, there remains a need to provide ink compositions with good dispersion stability and further good printability and print performance.

### SUMMARY OF THE INVENTION

The present invention relates to ink compositions comprising a liquid vehicle, at least one modified pigment comprising a pigment having attached at least one organic functional group, at least one salt having a polyvalent ion, and at least one polymer. The polyvalent ion can be cationic or anionic and is capable of coordinating with the functional group of the pigment.

The present invention further relates to a method of generating an image comprising the steps of incorporating into a printing apparatus the ink composition described above and generating an image onto a substrate.

It is to be understood that both the foregoing general description and the following detailed description are exemplary and explanatory only and are intended to provide further explanation of the present invention, as claimed.

### DETAILED DESCRIPTION OF THE INVENTION

The present invention relates to ink compositions comprising a liquid vehicle, at least one modified pigment, at least one salt having a polyvalent ion, and at least one polymer as defined in claim 1.

As described above, ink compositions in general include a liquid vehicle, a colorant, and other additives and/or cosolvents used to adjust performance. The liquid vehicle acts as a carrier. The vehicle for the ink compositions of the present invention may be either an aqueous or a non-aqueous vehicle. Preferably, the vehicle is an aqueous vehicle and the ink composition is an aqueous ink composition. The ink composition of the present invention is preferably an ink jet ink composition.

Suitable additives may also be incorporated into these ink compositions to impart a number of desired properties while maintaining the stability of the compositions. For example, surfactants may be added to further enhance the colloidal stability of the composition. Other additives are well known in the art and include humectants, biocides, binders, drying accelerators, penetrants, and the like. The amount of a particular additive will vary depending on a variety of factors but are generally present in an amount ranging between 0% and 40%.

Additionally, ink compositions may also incorporate dyes to modify color balance and adjust optical density. Such dyes include food dyes, FD&C dyes, derivatives of phthalocyanine tetrasulfonic acids, including copper phthalocyanine derivates, tetra sodium salts, tetra ammonium salts, tetra potassium salts, tetra lithium salts, and the like.

The ink compositions of the present invention comprise at least one modified pigment. Several pigment types are useful for the ink compositions of the present invention. The pigments to be modified can be, but are not limited to, pigments traditionally used in ink compositions (including inkjet ink compositions), coating compositions (including paint formulations), liquid and solid toners, films, plastics, rubbers, and the like.

The pigments to be modified may be chosen from a wide range of conventional colored pigments. Preferably, the pigment is a white pigment, a black pigment, a blue pigment, a brown pigment, a cyan pigment, a green pigment, a violet pigment, a magenta pigment, a red pigment, or a yellow pigment, or shades or combinations thereof. Suitable classes of colored pigments include, for example, anthraquinones, phthalocyanine blues, phthalocyanine greens, diazos, monoazos, pyranthrones, perylenes, heterocyclic yellows, quinacridones, diketopyrolo-pyroles, and (thio)indigoids. Representative examples of phthalocyanine blues include copper phthalocyanine blue and derivatives thereof (Pigment Blue 15). Representative examples of quinacridones include Pigment Orange 48, Pigment Orange 49, Pigment Red 122, Pigment Red 192, Pigment Red 202, Pigment Red 206, Pigment Red 207, Pigment Red 209, Pigment Violet 19 and Pigment Violet 42. Representative examples of anthraquinones include Pigment Red 43, Pigment Red 194 (Perinone Red), Pigment Red 216 (Brominated Pyanthrone Red) and Pigment Red 226 (Pyranthrone Red). Representative examples of perylenes include Pigment Red 123 (Vermillion), Pigment Red 149 (Scarlet), Pigment Red 179 (Maroon), Pigment Red 190 (Red), Pigment Violet, Pigment Red 189 (Yellow Shade Red) and Pigment Red 224. Representative examples of thioindigoids include Pigment Red 86, Pigment Red 87, Pigment Red 88, Pigment Red 181, Pigment Red 198, Pigment Violet 36, and Pigment Violet 38. Representative examples of heterocyclic yellows include Pigment Yellow 1, Pigment Yellow 3, Pigment Yellow 12, Pigment Yellow 13, Pigment Yellow 14, Pigment Yellow 17, Pigment Yellow 65, Pigment Yellow 73, Pigment Yellow 74, Pigment Yellow 110, Pigment Yellow 117, Pigment Yellow 128, Pigment Yellow 138, and Pigment Yellow 151. A representative example of diketopyrolo-pyroles include Pigment Red 254. Such pigments are commercially available in either powder or press cake form from a number of sources including, BASF Corporation, Engelhard Corporation and Sun Chemical Corporation. Examples of other suitable colored pigments are described in the *Colour Index,* 3rd edition (The Society of Dyers and Colourists, 1982). Representative examples of black pigments include various carbon blacks (Pigment Black 7) such as channel blacks, furnace blacks and lamp blacks, and include, for example, carbon blacks sold under the Regal®, Black Pearls®, Elftex®, Monarch®, Mogul®, and Vulcan® trademarks available from Cabot Corporation (such as Black Pearls® 2000, Black Pearls® 1400, Black Pearls® 1300, Black Pearls® 1100, Black Pearls® 1000, Black Pearls® 900, Black Pearls® 880, Black Pearls® 800, Black Pearls® 700, Black Pearls® L, Elftex® 8, Monarch® 1400, Monarch® 1300, Monarch® 1100, Monarch® 1000, Monarch® 900, Monarch® 880, Monarch® 800, Monarch® 700, Mogul® L, Regal® 330, Regal® 400, Vulcan® P). Other suitable carbon blacks include, but are not limited to, Printex 40, Printex 80, Printex 300, Printex L, Printex U, Printex V, Special Black 4, Special Black 5, FW200, (the foregoing available from Degussa Corporation), Raven 780, Raven 890, Raven 1020, Raven 1040, Raven 1255, Raven 1500, Raven 5000, Raven 5250 (the foregoing available from Columbian Chemical Corporation) and MA100 and MA440 available from Mitsubishi Chemical Corporation.

Other suitable pigments within the scope of the present invention include carbon products such as graphite, carbon black, vitreous carbon, carbon fibers, activated charcoal, and activated carbon. The carbon may be of the crystalline or amorphous type. Finely divided forms of the above are preferred; also, it is possible to utilize mixtures of different carbons.

The pigments will typically have a wide range of BET surface areas, as measured by nitrogen adsorption. Preferably, the pigment has a surface area equal or greater than 10 m²/g, and more preferably equal or greater than and 100 m²/g, thereby corresponding to a smaller primary/aggregate particle size. Such surface areas have been found to provide for a more uniform distribution and efficient level of treating agent on the pigment and a higher percent yield of the modified pigment after post processing techniques. If the preferred higher surface area of the pigment (thereby corresponding to a smaller particle size) is not readily available, it is well recognized by those skilled in the art that the pigment may be subject to conventional size comminution or reduction techniques, such as ball or jet milling, to reduce the pigment to the desired particle size.

The modified pigment used in the ink composition of the present invention comprises a pigment having attached at least one organic functional group. The functional group may vary depending on the vehicle used for the ink composition as well as on the desired ink and print performance properties. This allows for greater flexibility by tailoring the pigment to the specific application. The functional group is a group which is capable of coordinating or associating with the polyvalent ion of the salt, described below. The term coordinating, as used herein, refers to the interaction of the polyvalent ion and the functional group of the pigment. This interaction may form a bond, and this bond can be ionic, covalent, or partially ionic or covalent. Representative examples of coordinating functional groups include carbonyls, carboxylates, catechols, hydroxylamines, oximes, thiols, di-pyridines, and hydroxy-quinolines.

The functional group attached to the modified pigment comprises at least one organic group. The organic group is an ionic group, an ionizable group, or a mixture of an ionic group and an ionizable group. An ionic group is either anionic or cationic and is associated with a counterion of the opposite charge including inorganic or organic counterions such as Na⁺, K⁺, Li⁺, NH₄⁺, NR'₄⁺ acetate, NO₃⁻, OH⁻, R'SO₃⁻, R'OSO₃⁻ and Cl⁻, where R' represents hydrogen or an organic group such as a substituted or unsubstituted aryl and/or alkyl group. An ionizable group is one that is capable of forming an ionic group in the medium of use. Thus, the organic group is an organic ionic group. Organic ionic groups include those described in U. S. Patent No. 5,698,016, the description of which is fully incorporated herein by reference.

Negatively charged organic ionic groups may be generated from groups having ionizable substituents that can form anions, such as acidic substituents, or may be the anion in the salts of ionizable substituents. Preferably, when the ionizable substituent forms an anion, the ionizable substituent has a pKₐ of less than 11. The organic ionic group could further be generated from a species having ionizable groups with a pKa of less than 11 and salts of ionizable substituents having a pKₐ of less than 11. The pKa of the ionizable substituent refers to the pK, of the ionizable substituent as a whole, not just the acidic substituent. More preferably, the pKₐ is less than 10 and most preferably less than 9.

Representative examples of ionic groups include -COO, -SO₃⁻, -OSO₃⁻, -HPO₃⁻, -OPO₃⁻², and -PO₃⁻². Representative examples of ionizable groups include -COOH, -SO₃H, -PO₃H₂, -CONHOH, - R'SH, - R'OH, and -SO₂NHCOR', where R' represents hydrogen or an organic group such as a substituted or unsubstituted aryl and/or alkyl group. Particularly preferred species are -COO⁻ and -SO₃⁻. Preferably, the organic ionic group is generated from a substituted or unsubstituted carboxyphenyl group or a substituted or unsubstituted sulfophenyl group. Specific organic ionic groups are -C₆H₄CO₂⁻, -C₆H₃(OH)CO₂⁻ and -C₆H₄SO₃⁻.

Positively charged organic ionic groups may be generated from protonated amines which are attached to the pigment. Preferably, an organic group having an amine substituent has a pK_{b} of less than 5. Positively charged organic ionic group may be quaternary ammonium groups (-NR'₃⁺) and quaternary phosphonium groups (-PR'₃⁺), where R' represents hydrogen or an organic group such as a substituted or unsubstituted aryl and/or alkyl group. For example, amines may be protonated to form ammonium groups in acidic media. Quaternized cyclic ammonium ions, and quaternized aromatic ammonium ions, can also be used as the organic ionic group. Thus, N-substituted pyridinium species, such as N-methylpyridyl, can be used in this regard. Examples of cationic organic groups include, but are not limited to, -3-C₅H₄N(C₂H₅)⁺, -3-C₅H₄N(CH₃)⁺, -3-C₅H₄N(CH₂C₆H₅)⁺, -C₆H₄(NC₅H₅⁺), -C₆H₄COCH₂N(CH₃)₃⁺, -C₆H₄COCH₂(NC₅H₅)⁺, -C₆H₄SO₂NH(C₄H₃N₂H⁺), -C₆H₄CH₂N(CH₃)₃⁺ , -C₆H₄NH₃⁺, -C₆H₄NH₂(CH₃)⁺, -C₆H₄NH(CH₃)₂⁺, -C₆H₄N(CH₃)₃⁺, -C₆H₄CH₂NH₃⁺, -C₆H₄CH₂NH₂(CH₃)+, -C₆H₄CH₂NH(CH₃)₂⁺, -C₆H₄CH₂N(CH₃)₃⁺, -C₆H₄CH₂CH₂NH₃⁺, -CH₂CH₂NH₂(CH₃)⁺, -C₆H₄CH₂CH₂NH(CH₃)₂⁺ and -C₆H₄CH₂CH₂N(CH₃)₃⁺. Other substituted or unsubstituted arylene or heteroarylene groups can be used in the place of the C₆H₄ groups shown in the structures above. Preferably, the cationic organic group is -NR'₃⁺ wherein R' is an alkyl group or an aryl group. Another preferred group is -C₅H₄N-R'⁺, wherein R' is an alkyl group such as a methyl group or a benzyl group.

In another embodiment, the functional group attached to the modified pigment is polymeric. The attached polymer groups may be present as individual attached chains or as a coating on the pigment, as is described below.

For example, the functional group attached to the modified pigments may comprise at least one organic group represented by the formula -X-Sp-[Polymer]R, wherein X, which is directly attached to the pigment, represents an aryl or heteroaryl group or an alkyl group and is substituted with an Sp group, Sp represents a spacer group, the group Polymer represents a polymeric group comprising repeating monomer groups or multiple monomer groups or both, and R represents hydrogen, a bond, a substituted or unsubstituted alkyl group, or a substituted or unsubstituted aryl group. The group Polymer can be substituted or unsubstituted with additional groups. The total number of monomer repeating units that comprise the "polymer" is not greater than about 500 monomer repeating units.

The group Polymer can be any polymeric group capable of being attached to a pigment. Thus, for example, the group Polymer can be a thermoplastic polymeric group or a thermosetting polymeric group. Further, the polymeric group can be a homopolymer, copolymer, terpolymer, and/or a polymer containing any number of different repeating units. Further, the group Polymer can be any type of polymeric group, such as a random polymer, alternating polymer, graft polymer, block polymer, star-like polymer, and/or comb-like polymer. The group Polymer can also be one or more polyblends. The group Polymer can be an interpenetrating polymer network (IPN); simultaneous interpenetrating polymer network (SIN); or interpenetrating elastomeric network (IEN).

For the group Polymer, examples include, but are not limited to, linear-high polymers such as polyethylene, poly(vinylchloride), polyisobutylene, polystyrene, polycaprolactam (nylon), polyisoprene, and the like. Other general classes are polyamides, polycarbonates, polyelectrolytes, polyesters, polyethers, (polyhydroxy)benzenes, polyimides, polymers containing sulfur (such as polysulfides, (polyphenylene) sulfide, and polysulfones), polyolefins, polymethylbenzenes, polystyrene and styrene copolymers (ABS included), acetal polymers, acrylic polymers, acrylonitrile polymers and copolymers, polyolefins containing halogen (such as polyvinyl chloride and polyvinylidene chloride), fluoropolymers, ionomeric polymers, polymers containing ketone group(s), liquid crystal polymers, polyamide-imides, polymers containing olefinic double bond(s) (such as polybutadiene, polydicyclopentadiene), polyolefin copolymers, polyphenylene oxides, poly(vinyl alcohols), polyurethanes, thermoplastic elastomers, and the like. At least some of these monomer units of the group Polymer comprise an ionic group, an ionizable group, or a mixture of ionic or ionizable groups.

Specific examples of polymeric groups represented by the group Polymer are acrylic or maleic homo- or copolymers. Thus, for example, the group Polymer represents homo- and copolymers of acrylic or methacrylic acid such as styrene-acrylate polymers, sulfonated or carboxylated styrene-acrylic polymers, and ethylene-acrylic acid polymers, and homo- and copolymers of maleic acid such as styrene-maleic acid polymers and hydrolyzed copolymers of maleic anhydride.

The group Sp represents a spacer group as described above. Spacer group, as used herein, is a link between two groups and can be a bond, or a chemical group such as, but not limited to, esters such as -CO₂- and -O₂C-, sulfones such as -SO₂- and -SO₂C₂H₄-, ketones such as -C(O)-, amide derivatives such as -NRC(O) -, -C(O)NR-, -NRCO₂-, -O₂CNR-, and -NRC(O)NR-, sulfonates, sulfonamides, -O-, -S-, amines such as -NR-, imides, arylene groups, alkylene groups, and the like, wherein R, which can be the same or different, represents hydrogen or an organic group such as a substituted or unsubstituted aryl and/or alkyl group.

The group X represents an arylene or heteroarylene group or an alkylene group. X is directly attached to the pigment and is further substituted with an Sp group. The aromatic group can be further substituted with any group, such as one or more alkyl groups or aryl groups. Preferably, the arylene or heteroarylene group is phenylene, naphthylene, or biphenylene. When X represents an alkylene group, examples include, but are not limited to, substituted or unsubstituted alkyl groups which may be branched or unbranched. The alkylene group can be substituted with one or more groups, such as aromatic groups. Preferred examples include, but are not limited to, C₁-C₁₂ groups like methylene, ethylene, propylene, and butylene groups. Preferably, X is an arylene group.

The group X may be substituted with one or more functional groups. Examples of functional groups include, but are not limited to, R"', OR"', COR"', COOR"', OCOR"', carboxylates, halogens, CN, NR"'₂, SO₃H, sulfonates, sulfates, NR"'(COR"'), CONR'''₂, NO₂, PO₃H₂, phosphonates, phosphates, N=NR"', SOR"', NSO₂R"', wherein R'" which can be the same or different, is independently hydrogen, branched or unbranched C₁-C₂₀ substituted or unsubstituted, saturated or unsaturated hydrocarbons, e.g., alkyl, alkenyl, alkynyl, substituted or unsubstituted aryl, substituted or unsubstituted heteroaryl, substituted or unsubstituted alkaryl, or substituted or unsubstituted aralkyl.

As shown by the structures above, the group Polymer is attached to the pigment through the spacer group Sp. However, it will also be recognized that when R represents a bond, the available bond can also be attached to the pigment. In addition, the group Polymer can also be attached to the pigment at multiple points along the polymer chain through proper choice of substituent groups on the repeating monomer units. These substituents may also comprise spacer groups or -X-Sp- groups as described above. Thus, these groups can be attached to the pigment at either end or at points along the backbone. Further, these groups can be any type of polymeric group, such as a random polymer, alternating polymer, graft polymer, block polymer, star-like polymer, and/or comb-like polymer.

As another example, the polymer group attached to the pigment may also be directly attached. Thus, the polymer can be attached either through a covalent or ionic bond. The amount of polymer present on the modified pigments can be high enough to cover a substantial amount of the pigment. Thus, in another embodiment, the modified pigment products used in the method of the present invention comprise a pigment that is at least partially coated with one or more polymeric coatings and can be substantially or fully coated by one or more polymers. The use of the term "coated" includes both partially and fully coated pigments and modified pigments - the polymer partially or fully encapsulates the modified pigment, wherein the modified pigment is the core and the polymer is the shell. The polymer(s) coated onto or used to encapsulate the modified pigment is preferably present on the modified pigment such that the polymer(s) is not substantially extractable by an organic solvent. More preferably, the polymer(s) on the modified pigment is attached by physical (for example, adsorption) and/or chemical means (for example, bonding or grafting).

Further details concerning the polymer coated pigments and methods of making them are set forth in International Published Application No. WO 00/22051, incorporated in its entirety by reference herein.

Modified pigments having multiple attached groups can also be used in the ink compositions of the present invention as long as at least one such group is a functional group as described herein. For example, a modified pigment having an attached ionic or ionizable group may further comprise additional ionic or ionizable groups that are different from the first or may further comprise a group which is non-ionic such as a non-ionic organic group, a non-ion polymeric group, or a non-ionic polar group such as those comprising an alkylene oxide group. Other combinations of attached groups can also be used.

The amount of attached organic groups, whether ionic, ionizable or polymeric, useful in the ink compositions of the present invention can be varied in order to attain desired performance attributes, such as dispersibility in the ink vehicle and print waterfastness and smearfastness. In addition, as previously stated, modified pigments comprising multiple attached organic groups can result in improved properties. In general, the amount of attached organic groups is from about 0.01 to about 10.0 micromoles of organic group per m² surface area of pigment, as measured by nitrogen adsorption (BET method). For example, the amount of attached organic groups is between from about 0.5 to about 4.0 micromoles per m².

The modified pigments used in the ink compositions of the present invention are prepared using methods known to those skilled in the art such that organic groups are attached to the pigment. This provides a more stable attachment of the groups onto the pigment compared to adsorbed groups, e.g., polymers, surfactants, and the like. For example, the modified pigments used in the method of the present invention can be prepared using the methods described in U. S. Patent Nos. 5,554,739, 5,851,280, 6,042,643, 5,707,432, and 5,837,045, and PCT Publication WO 99/23174, the descriptions of which are fully incorporated herein by reference.

The modified pigments may be purified by washing, such as by filtration, centrifugation, or a combination of the two methods, to remove unreacted raw materials, byproduct salts and other reaction impurities. The products may also be isolated, for example, by evaporation or it may be recovered by filtration and drying using techniques known to those skilled in the art. Dispersions of the pigments may be further purified or classified to remove impurities and other undesirable free species which can co-exist in the dispersion as a result of the manufacturing process. For example, the dispersion can be purified to remove any undesired free species, such as unreacted treating agent. Known techniques of ultrafiltration/diafiltration using a membrane or ion exchange may be used to purify the dispersion and remove a substantial amount of free ionic and unwanted species. An optional exchange of counterions step may also occur in the purification process whereby the counterions that form a part of the modified pigment are exchanged or substituted with alternative counterions (including, e.g., amphiphilic ions) utilizing known ion exchange techniques such as ultrafiltration, reverse osmosis, ion exchange columns and the like. Particular examples of counterions that can be exchanged include, but are not limited to, Na⁺, K⁺, Li⁺, NH₄⁺, Ca²⁺, Mg²⁺, Cl⁻, NO₃⁻, NO₂⁻, acetate, and Br⁻. Such additional classification and purification methods are more fully described in PCT Publication WO 99/38921, the disclosure of which is fully incorporated herein by reference.

The ink composition of the present invention further comprises at least one salt having a polyvalent ion. Salts having polyvalent ions are commercially available from a variety of sources. The polyvalent ion is capable of coordinating with the organic group of the modified pigment, with the polymer (which is described below), or both. The polyvalent ion can either be the anionic portion of the salt or the cationic portion of the salt. Therefore, the polyvalent ion can be either a polyvalent anion or a polyvalent cation. The valency of the ion refers to the overall charge of the ionic species and is determined by the various oxidation states of the metal. Thus, for example, if the polyvalent ion is the cation of the salt, the charge is the overall charge of the cationic species. Preferably, the polyvalent cation is a polyvalent metal cation.

Many types of polyvalent cations can be used for the salt in the ink composition of the present invention. Preferred examples of polyvalent metal cations include, but are not limited to, calcium, cadmium, copper, iron, magnesium, nickel, zinc, aluminum, or zirconium cations and , in particular, Ca⁺², Cd⁺² Cu⁺², Fe⁺², Mg⁺², Ni⁺², Zn⁺², Al⁺³, Fe⁺³, and Zr⁺⁴. More preferred examples are metal cations that are at least divalent. Most preferred are salts which contain Zn⁺² or Zr⁺⁴ ions. These metal cations are particularly useful since they are readily available and can also be added in "fugitive" form. Thus, for example, a divalent zinc metal cation can be added as zinc ammonium carbonate, which generates free Zn⁺² ions only after ammonia and carbonic acid are liberated. In addition complex metal salts, such as zircoaluminates, may also be used.

When the polyvalent ion is the anionic portion of the salt, a variety of different polyvalent anions can be used. Examples include, but are not limited to, carbonate, sulfate, oxalate, citrate, tartrate, and phosphate ions.

The ink composition of the present invention further comprises at least one polymer. In one embodiment, the polymer is the organic group attached to the pigment, as described above. In another embodiment, the polymer is additional to any polymer that may be present as part of the modified pigment.

Any added polymer can be used for the ink composition of the present invention. Examples include, but are not limited to, polyimines, polyacrylates, polyamides, polycarbonates, polyesters, polyethers, polyimides, polymers containing styrene, and polyurethanes. In order to produce compositions with good dispersion stability and good overall printability, polymers which are at least partially soluble in the vehicle are preferred.

Preferably the polymer comprises at least one functional group which is capable of coordinating or associating with the polyvalent ion of the salt, similarly to the modified pigments as described above. Thus, polymers containing at least one ionic group, at least one ionizable group, or a combination of at least one ionic group or at least one ionizable group are preferred. More preferred are polymers which comprise at least one carboxylate group, sulfonate group, or ammonium group. Examples of these preferred polymers include polyacrylic acid, polymethacrylic acid, copolymers of acrylic acid, copolymers of methacrylic acid, copolymers of maleic acid (whether prepared by polymerization of maleic acid or hydrolysis of polymers containing maleic anhydride), copolymers of crotonic acid, and salts thereof. Most preferred are styrene-acrylate polymers and styrene-maleic acid polymers.

Any combination of salts (with either polyvalent anions or cations), modified pigments, and polymers are possible. However, as described above, the polyvalent ion is an ion which is capable of coordinating with either the functional group of the modified pigment. For this reason, it is preferred that a salt having a polyvalent cation is used in combination with a modified pigment having attached at least one functional group which is anionic in nature as well as a polymer which comprises a functional group which is anionic in nature. Further, a salt having a polvalent anion is preferably used in combination with a modified pigment having an attached cationic group and a cationic polymer.

The ink compositions of the present invention can be prepared by combining the components in equipment known to one skilled in the art, such as an attritor or other stirring device. The components can also be added in any order. For example, the modified pigment dispersed in the liquid vehicle can first be combined with the salt and, in a second step, the polymer can then be added. Under these conditions, if the modified pigment has an attached ionic or ionizable group, the addition of the salt may result in flocculation of the pigment. However, the addition of the polymer as described herein redisperses the pigment to form a stable composition. In an alternative approach, the salt can first be added to the polymer in the vehicle. The addition of the salt may also generate an insoluble or partially soluble polymer mixture. The modified pigment can then be added to this mixture to produce the desired ink composition. Other combinations are also possible, such as the addition of the polymer and modified pigment to the vehicle with a subsequent addition of salt, and each is capable of producing the ink compositions of the present invention.

The ink compositions can be formed with a minimum of other components (additives and/or cosolvents) and processing steps. The modified pigment, salt, and polymer (if not part of the pigment) is present in the ink compositions in an amount effective to provide the desired image qualities (for example, optical density) without detrimentally affecting the performance of the ink. For example, typically, the modified pigment will be present in an amount ranging from about 1% to about 20% based on the weight of the ink. It is also within the bounds of the present invention to use a formulation containing a mixture of unmodified pigments with the modified pigments described above.

The ink compositions can be further purified and/or classified using methods such as those described above for the modified pigments. An optional counterion exchange step can also be used. In this way, unwanted impurities or undesirable large particles can be removed to produce an ink with good overall properties.

The present invention further relates to a method of incorporating into a printing apparatus the ink composition described above and generating an image onto a substrate generating an image. This method comprises the steps of incorporating at least one pigment comprising a pigment having attached at least one organic functional group, at least one salt with a polyvalent ion, and at least one polymer into a liquid vehicle which is then incorporated into a printing apparatus. The vehicle can be either a non-aqueous or an aqueous vehicle. Preferably the method is an ink jet printing method, which is a non-impact process wherein droplets of ink are produced and deposited on a substrate such as paper, transparent film, or textile material in response to an electronic signal. The method of the present invention includes these substrates. Typical ink jet printing systems are continuous stream and drop-on-demand, of which there are three basic types - piezoelectric, thermal or bubble jet, and acoustic. The method of the present invention includes these methods of ink jet printing.

The present invention will be further clarified by the following examples, which are intended to be purely exemplary of the present invention.

### EXAMPLES

### Examples 1-4

For Examples 1-4, the following general procedure was used.

The solutions of styrene-co-maleic acid polymer used in the following examples were prepared by base hydrolysis of an aqueous acetone solution of poly(styrene-co-maleic anhydride). Thus, the styrene-maleic anhydride polymer (commericially available from Monomer/Polymer and DAJAC Labs, Feasterville, PA) was added to 1 liter of acetone in a 2 liter flask fitted with a heating mantle and reflux condenser. The mixture was stirred and heated to fully dissolve the polymer. Once dissolved, a solution of sodium hydroxide in 200 mL water was added over one hour. The mixture was stirred for an additional 2 hours at 30°C at which time the reflux condenser was replaced with a simple distillation head and the acetone was removed by distillation. A total of 600 mL deionized water was added over the course of the distillation so that the solution remained easy to stir. The distillation was continued to remove several grams of water to ensure that all of the acetone had been removed. The resulting solution was characterized by % solids, pH, and thermogravimetric analysis (TGA). Amounts used to prepare the polymer solutions and results are shown in Table 1 below.

**Table 1**

| **Polymer composition** | **SMA (g)** | **NaOH (g)** | **% solid of solution** | **pH of solution** |
|---|---|---|---|---|
| 50:50, 1600 MW | 70 | 30 | 24.5 | 10.2 |
| 75:25, 1900 MW | 100 | 21.4 | 17.6 | 10.2 |

A freshly prepared solution of zinc chloride (1.36% solids) was added in one portion to a 20 mL vial containing Cab-O-Jet® 300 black dispersion (a 15% aqueous dispersion of a pigment black with a BET surface area 200 m²/g with attached carboxyphenyl groups commercially available from Cabot Corporation). This mixture was then shaken with ceramic grinding media (1/4") for 2 minutes and then allowed to stand for 2 hours. To this thick dispersion was added a solution of a styrene-co-maleic acid polymer (prepared as described above). This mixture was shaken intermittently for 20 minutes and then allowed to stand overnight.

The amounts of components added for each of these examples is shown in Table 2 below.

**Table 2**

| **Example Number** | **Cab-O-Jet®300 dispersion (g)** | **Zinc chloride (g)** | **Polymer solution (g)** | **Polymer type** |
|---|---|---|---|---|
| 1 | 6.67 | 2.43 | 2.54 g | Hydrolyzed 75/25 poly(styrene-co-maleic anhydride) (1900 MW, 17.6% solids) |
| 2 | 6.67 | 2.43 | 0.846 g | Hydrolyzed 75/25 poly(styrene-co-maleic anhydride) (1900 MW, 17.6% solids) |
| 3 | 6.67 | 2.43 | 1.53 g | Hydrolyzed 50/50 poly(styrene-co-maleic anhydride) (1600 MW, 24.5% solids) |
| 4 | 6.67 | 2.43 | 0.510 g | Hydrolyzed 50/50 poly(styrene-co-maleic anhydride) (1600 MW, 24.5% solids) |

A sample of the resulting dispersion was removed for particle size analysis, and the remaining material was dialyzed using a 300,000 MW cutoff dialysis tubing (cellulose ester tubing available from Spectrum Laboratories, Rancho Dominguez, CA) sealed to form a bag. The dialysis was run against 1 liter of deionized water at room temperature for 24 hours. After 24 hours, the water was replaced with fresh water and the dialysis continued. This procedure was repeated for 1 more day (total of 3 days). After removing a sample for particle size analysis, the remainder of the resulting dialyzed dispersion was concentrated to about 5% solids by evaporation in an oven.

The performance of these compositions was evaluated based on a 3 mil wet film drawdown on Xerox 4024 DP paper. The results are summarized in Table 3 below.

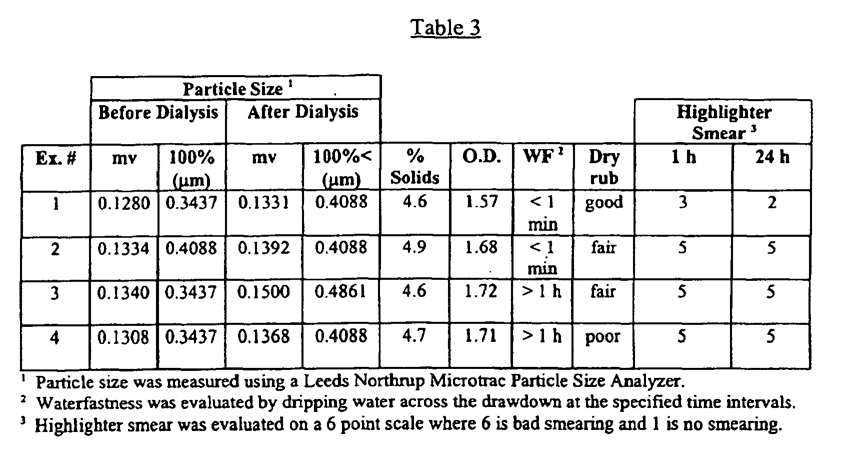

The results show that several polymer types and levels can be used along with a modified pigment having attached functional groups and a polyvalent ion to give ink compositions with acceptable overall performance. It is also expected that a range of different polymers types and levels can be used in the present invention.

### Examples 5-6

For the following examples, the procedure used for Example 1 was followed, except the order of addition was changed. The polymer type and the amount of polymer, salt, and dispersion were the same as for Example 1, as shown in Table 4 below.

**Table 4**

| **Example Number** | **Cab-O-Jet®300 dispersion (g)** | **Zinc chloride (g)** | **Polymer solution (g)** | **Order of Addition** |
|---|---|---|---|---|
| 1 | 6.67 | 2.43 | 2.54 | Mixed pigment dispersion and zinc chloride solution, then added polymer solution |
| 5 | 6.67 | 2.43 | 2.54 g | Mixed polymer and zinc chloride solution, then added pigment dispersion |
| 6 | 6.67 | 2.43 | 2.54 g | Mixed polymer solution and pigment dispersion, then added zinc chloride solution |

These samples were dialyzed in the same manner as in Example 1. The results of particle size analysis and drawdown performance are shown in Table 5.

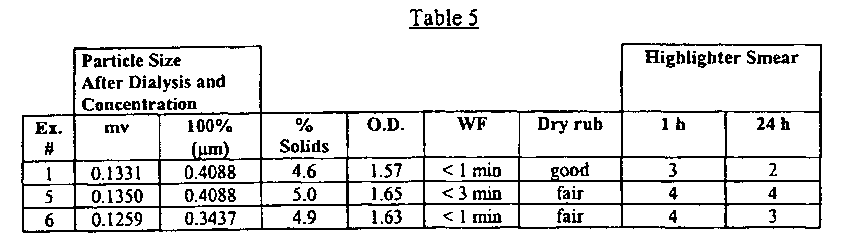

The data for Example 1 is taken from Table 3 and repeated here.

These examples show that ink compositions with acceptable performance can be prepared by any order of addition of the components.

### Comparative Example 1

For the following example, the procedure used for Example 1 was followed, except that no zinc chloride was added. The polymer type and the amount of polymer, and dispersion were the same as for Example 1, as shown in Table 6 below.

**Table 6**

| **Ex. #** | **Cab-O-Jet®300 dispersion (g)** | **Zinc chloride (g)** | **Polymer solution (g)** | **Order of Addition** |
|---|---|---|---|---|
| 1 | 6.67 | 2.43 | 2.54 | Mixed pigment dispersion and zinc chloride solution, then added polymer solution |
| Comp 1 | 6.67 | 0.0 | 2.54 | Mixed polymer and pigment dispersion with no added zinc chloride solution |

These samples were dialyzed in the same manner as in Example 1. The results of particle size analysis and drawdown performance are shown in Table 7.

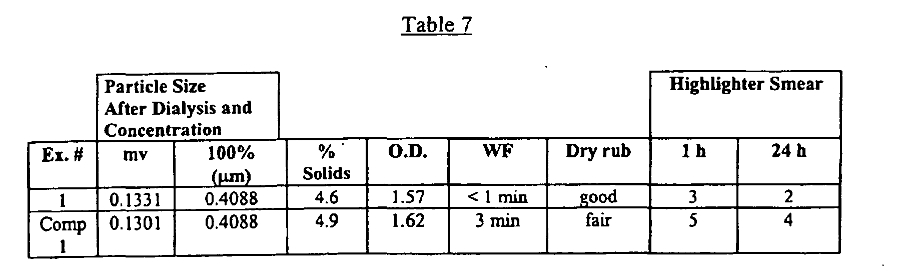

The data for Example 1 is taken from Table 3 and repeated here.

These results show that the combination of a modified pigment having an attached organic group, a salt having a polyvalent ion, and a polymer gives an ink composition with overall better performance than one in which no salt is added. In addition, this combination gives rise to far improved stability over a composition in which only a modified pigment and a salt are combined (based on the observations made in Example 1 in which the addition of the salt and a modified pigment gave rise to coagulation).

The foregoing description of preferred embodiments of the present invention has been presented for the purposes of illustration and description. It is not intended to be exhaustive or to limit the invention to the precise form disclosed. Modifications and variations are possible in light of the above teachings, or may be acquired from practice of the invention. The embodiments were chosen and described in order to explain the principles of the invention and its practical application to enable one skilled in the art to utilize the invention in various embodiments and with various modifications as are suited to the particular use contemplated. It is intended that the scope of the invention be defined by the claims appended hereto, and their equivalents.

## Claims

1. An ink composition composing a) a liquid vehicle, b) at least one modified pigment comprising a pigment having attached at least one functional group, wherein said functional group comprises at least one organic group, c) at least one salt having a polyvalent ion, and d) at least one polymer, wherein said functional group is capable of coordinating with said polyvalent ion, and is anionic when the salt comprises a polyvalent cation and is cationic when the salt comprises a polyvalent anion.

2. The ink composition of claim 1, wherein the vehicle is an aqueous vehicle.

3. The ink composition of claim 1, wherein the vehicle is a non-aqueous vehicle.

4. The ink composition of claim 1, wherein the ink composition is an inkjet ink composition.

5. The ink composition of claim 1, wherein the organic group comprises at least one ionic group, at least one ionizable group, or a mixture of at least one ionic group and at least one ionizable group.

6. The ink composition of claim 1, wherein the organic group comprises at least one carboxylate group, sulfonate group, or ammonium group.

7. The ink composition of claim 1, wherein the functional group-comprises at least one ionic group, at least one ionizable group, or a mixture of at least one ionic group and at least one ionizable group.

8. The ink composition of claim 1, wherein the functional group comprises at least one carboxylate group, sulfonate group, or ammonium group.

9. The ink composition of claim 1, wherein the functional group is a polymeric group.

10. The ink composition of claim 1, wherein the pigment is carbon black, graphite, vitreous carbon, finely-divided carbon, activated carbon, activated charcoal, or mixtures thereof.

11. The ink composition of claim 10, wherein the pigment is carbon black.

12. The ink composition of claim 1, wherein the pigment is a white pigment, a black pigment, a blue pigment, a brown pigment, a cyan pigment, a green pigment, a violet pigment, a magenta pigment, a red pigment, a yellow pigment, or combinations thereof, or a pigment having a white shade, a black shade, a blue shade, a brown shade, a cyan shade, a geen shade, a violet shade, a magenta shade, a red shade or a yellow shade.

13. The ink composition of claim 1, wherein the polyvalent ion of the salt comprises a polyvalent metal cation.

14. The ink composition of claim 13, wherein the polyvalent metal cation is a divalent metal cation.

15. The ink composition of claim 13, wherein the polyvalent metal cation is a calcium, cadmium, copper, iron, magnesium, nickel, zinc, aluminum, or zirconium cation.

16. The ink composition of claim 13, wherein the polyvalent metal cation is selected from the group consisting of: Ca⁺²,Cd⁺², Cu⁺², Fe⁺², Mg⁺², Ni⁺², Zn⁺², Al⁺³, Fe⁺³, and Zr⁺⁴.

17. The ink composition of claim 1, wherein the polyvalent ion of the salt is Zn⁺² or Zr⁺⁴.

18. The ink composition of claim 1, wherein the polyvalention of the salt is Zn⁺².

19. The ink composition of claim 1, wherein the salt comprises a polyvalent anion.

20. The ink composition of claim 1, wherein the polymer comprises at least one functional group capable of coordinating with the polyvalent ion.

21. The ink composition of claim 20, wherein the functional group comprises at least one ionic group, at least one ionzable group, or a mixture of at least one ionic group and at least one ionizable group.

22. The ink composition of claim 20, wherein the functional group comprises at least one carboxylate group, sulfonate group, or ammonium group.

23. The ink composition of claim 1, wherein the polymer is selected from the group consisting of: polyacrylic acid, polymethacrylic acid, copolymers of acrylic acid, copolymers of methacrylic acid, copolymers ofmaleic acid, and salts thereof.

24. The ink composition of claim 1, wherein the polymer is a styrene-acrylate polymer or a styrene-maleic acid polymer.

25. The ink composition of claim 1, wherein the functional group is the at least one polymer.

26. A method of generating an image comprising the steps of: 1) incorporating into a printing apparatus an ink composition comprising a liquid vehicle, at least one modified pigment comprising a pigment having attached at east one functional group, wherein said functional, group comprises at least one organe group, at least one salt with a polyvalent ion, and at least one polymer, and 2) generating an image on a substrate, wherein said functional group is capable of coordinating with said polyvalent and is anionic when the salt comprises a polyvalent cation and is cationic when the salt comprises a present invention.

27. The method of claim 26, wherein the liquid vehicle is an aqueous vehicle.

28. The method of claim 26, wherein the liquid vehicle is a non-aqueous vehicle.

29. The method of claim 26, wherein the method is an inkjet ink printing method.

## Patentansprüche

1. Tintenzusammensetzung, die umfasst
(a) einen flüssigen Träger (Vehikel),
(b) mindestens ein modifiziertes Pigment, das ein Pigment umfasst, an das mindestens eine funktionelle Gruppe gebunden ist, wobei die funktionelle Gruppe mindestens eine organische Gruppe umfasst,
(c) mindestens ein Salz, das ein polyvalentes Ion aufweist, und
(d) mindestens ein Polymer, in dem die funktionelle Gruppe sich an das polyvalente Ion anlagern kann und anionisch ist, wenn das Salz ein polyvalentes Kation umfasst, und kationisch ist, wenn das Salz ein polyvalentes Anion umfasst.

2. Tintenzusammensetzung nach Anspruch 1, in welcher der Träger (das Vehikel) ein wässriger Träger (Vehikel) ist.

3. Tintenzusammensetzung nach Anspruch 1, in welcher der Träger (das Vehikel) ein nicht-wässriger Träger (Vehikel) ist.

4. Tintenzusammensetzung nach Anspruch 1, in der die Tintenzusammensetzung eine Tintenstrahl-Tintenzusammensetzung ist.

5. Tintenzusammensetzung nach Anspruch 1, in der die organische Gruppe mindestens eine ionische Gruppe, mindestens eine ionisierbare Gruppe oder eine Mischung aus mindestens einer ionischen Gruppe und mindestens einer ionisierbaren Gruppe umfasst.

6. Tintenzusammensetzung nach Anspruch 1, in der die organische Gruppe mindestens eine Carboxylatgruppe, Sulfonatgruppe oder Ammoniumgruppe umfasst.

7. Tintenzusammensetzung nach Anspruch 1, in der die funktionelle Gruppe mindestens eine ionische Gruppe, mindestens eine ionisierbare Gruppe oder eine Mischung aus mindestens einer ionischen Gruppe und mindestens einer ionisierbaren Gruppe umfasst.

8. Tintenzusammensetzung nach Anspruch 1, in der die funktionelle Gruppe mindestens eine Carboxylatgruppe, Sulfonatgruppe oder Ammoniumgruppe umfasst.

9. Tintenzusammensetzung nach Anspruch 1, in der die funktionelle Gruppe eine polymere Gruppe ist.

10. Tintenzusammensetzung nach Anspruch 1, in der das Pigment Ruß, Graphit, glasartiger Kohlenstoff, feinteiliger Kohlenstoff, aktivierter Kohlenstoff, Aktivkohle oder eine Mischung davon ist.

11. Tintenzusammensetzung nach Anspruch 10, in der das Pigment Ruß ist.

12. Tintenzusammensetzung nach Anspruch 1, in der das Pigment ein weißes Pigment, ein schwarzes Pigment, ein blaues Pigment, ein braunes Pigment, ein blaugrünes Pigment, ein grünes Pigment, ein violettes Pigment, ein purpurrotes Pigment, ein rotes Pigment, ein gelbes Pigment oder eine Kombination davon ist, oder ein Pigment mit einer weißen Farbtönung, einer schwarzen Farbtönung, einer blauen Farbtönung, einer braunen Farbtönung, einer blaugrünen Farbtönung, einer grünen Farbtönung, einer violetten Farbtönung, einer purpurroten Farbtönung, einer roten Farbtönung oder einer gelben Farbtönung ist.

13. Tintenzusammensetzung nach Anspruch 1, in der das polyvalente Ion des Salzes ein polyvalentes Metallkation umfasst.

14. Tintenzusammensetzung nach Anspruch 13, in der das polyvalente Metallkation ein divalentes Metallkation ist.

15. Tintenzusammensetzung nach Anspruch 13, in der das polyvalente Metallkation ein Calcium-, Cadmium-, Kupfer-, Eisen-, Magnesium-, Nickel-, Zink-, Aluminium- oder Zirkoniumkation ist.

16. Tintenzusammensetzung nach Anspruch 13, in der das polyvalente Metallkation ausgewählt ist aus der Gruppe, die besteht aus Ca⁺², Cd⁺², Cu⁺², Fe⁺², Mg⁺², Ni⁺², Zn⁺², Al⁺³, Fe⁺³ und Zr⁺⁴.

17. Tintenzusammensetzung nach Anspruch 1, in der das polyvalente Ion des Salzes Zn⁺² oder Zr⁺⁴ ist.

18. Tintenzusammensetzung nach Anspruch 1, in der das polyvalente Ion des Salzes Zn⁺² ist.

19. Tintenzusammensetzung nach Anspruch 1, in der das Salz ein polyvalentes Anion umfasst.

20. Tintenzusammensetzung nach Anspruch 1, in der das Polymer mindestens eine funktionelle Gruppe umfasst, die sich an das polyvalente Ion anlagern kann.

21. Tintenzusammensetzung nach Anspruch 20, in der die funktionelle Gruppe mindestens eine ionische Gruppe, mindestens eine ionisierbare Gruppe oder eine Mischung aus mindestens einer ionischen Gruppe und mindestens einer ionisierbaren Gruppe umfasst.

22. Tintenzusammensetzung nach Anspruch 20, in der die funktionelle Gruppe mindestens eine Carboxylatgruppe, Sulfonatgruppe oder Ammoniumgruppe umfasst.

23. Tintenzusammensetzung nach Anspruch 1, in der das Polymer ausgewählt ist aus der Gruppe, die besteht aus Polyacrylsäure, Polymethacrylsäure, Copolymeren von Acrylsäure, Copolymeren von Methacrylsäure, Copolymeren von Maleinsäure und Salzen davon.

24. Tintenzusammensetzung nach Anspruch 1, in der das Polymer ein Styrol-Acrylat-Polymer oder ein Styrol-Maleinsäure-Polymer ist.

25. Tintenzusammensetzung nach Anspruch 1, in der die funktionelle Gruppe das mindestens eine Polymer ist.

26. Verfahren zur Erzeugung eines Bildes, das die folgenden Stufen umfasst:
1) Einführung einer Tintenzusammensetzung, die umfasst einen flüssigen Träger (Vehikel), mindestens ein modifiziertes Pigment, das ein Pigment umfasst, an das mindestens eine funktionelle Gruppe gebunden ist, wobei die funktionelle Gruppe mindestens eine organische Gruppe umfasst, mindestens ein Salz mit einem polyvalenten Ion und mindestens ein Polymer, in eine Druckvorrichtung und
2) Erzeugung eines Bildes auf einem Substrat, wobei die funktionelle Gruppe sich an das polyvalente Ion anlagern kann und anionisch ist, wenn das Salz ein polyvalentes Kation umfasst, und kationisch ist, wenn das Salz ein polyvalentes Anion umfasst.

27. Verfahren nach Anspruch 26, in dem der flüssige Träger (Vehikel) ein wässriger Träger (Vehikel) ist.

28. Verfahren nach Anspruch 26, in dem der flüssige Träger (Vehikel) ein nicht-wässriger Träger (Vehikel) ist.

29. Verfahren nach Anspruch 26, wobei das Verfahren ein Tintenstrahl-Druckverfahren ist.

## Revendications

1. Une composition d'encre comprenant a) un véhicule liquide, b) au moins un pigment modifié comprenant un pigment auquel est fixé au moins un groupe fonctionnel, où ledit groupe fonctionnel comprend au moins un groupe organique, c) au moins un sel ayant un ion polyvalent, et d) au moins un polymère, où ledit groupe fonctionnel est capable de coordination avec ledit ion polyvalent et est anionique lorsque le sel comprend un cation polyvalent et est cationique lorsque le sel comprend un anion polyvalent.

2. La composition d'encre de la revendication 1, dans laquelle le véhicule est un véhicule aqueux.

3. La composition d'encre de la revendication 1, dans laquelle le véhicule est un véhicule non aqueux.

4. La composition d'encre de la revendication 1, dans laquelle la composition d'encre est une composition d'encre à jet d'encre.

5. La composition d'encre de la revendication 1, dans laquelle le groupe organique comprend au moins un groupe ionique, au moins un groupe ionisable, ou un mélange d'au moins un groupe ionique et d'au moins un groupe ionisable.

6. La composition d'encre de la revendication 1, dans laquelle le groupe organique comprend au moins un groupe carboxylate, un groupe sulfonate, ou un groupe ammonium.

7. La composition d'encre de la revendication 1, dans laquelle le groupe fonctionnel comprend au moins un groupe ionique, au moins un groupe ionisable, ou un mélange d'au moins un groupe ionique et d'au moins un groupe ionisable.

8. La composition d'encre de la revendication 1, dans laquelle le groupe fonctionnel comprend au moins un groupe carboxylate, un groupe sulfonate, ou un groupe ammonium.

9. La composition d'encre de la revendication 1, dans laquelle le groupe fonctionnel est un groupe polymère.

10. La composition d'encre de la revendication 1, dans laquelle le pigment est du noir de carbone, du graphite, du carbone vitreux, du carbone finement divisé, du carbone activé, du charbon de bois activé, ou des mélanges de ceux-ci.

11. La composition d'encre de la revendication 10, dans laquelle le pigment est du noir de carbone.

12. La composition d'encre de la revendication 1, dans laquelle le pigment est un pigment blanc, un pigment noir, un pigment bleu, un pigment marron, un pigment cyan, un pigment vert, un pigment violet, un pigment magenta, un pigment rouge, un pigment jaune, ou des combinaisons de ceux-ci, ou un pigment ayant une teinte blanche, une teinte noire, un teinte bleue, une teinte marron, une teinte cyane, une teinte verte, une teinte violette, une teinte magenta, une teinte rouge ou une teinte jaune.

13. La composition d'encre de la revendication 1, dans laquelle l'ion polyvalent du sel comprend un cation de métal polyvalent.

14. La composition d'encre de la revendication 13, dans laquelle le cation de métal polyvalent est un cation de métal divalent.

15. La composition d'encre de la revendication 13, dans laquelle le cation de métal polyvalent est un cation de calcium, de cadmium, de cuivre, de fer, de magnésium, de nickel, de zinc, d'aluminium ou de zirconium.

16. La composition d'encre de la revendication 13, dans laquelle le cation de métal polyvalent est choisi à partir du groupe se composant de Ca⁺², Cd⁺², Cu⁺², Fe⁺², Mg⁺², Ni⁺², Zn⁺², Al⁺³, Fe⁺³, et Zr⁺⁴.

17. La composition d'encre de la revendication 1, dans laquelle l'ion polyvalent du sel est Zn⁺³ ou Zr⁺⁴.

18. La composition d'encre de la revendication 1, dans laquelle l'ion polyvalent du sel est Zn⁺².

19. La composition d'encre de la revendication 1, dans laquelle le sel comprend un anion polyvalent.

20. La composition d'encre de la revendication 1, dans laquelle le polymère comprend au moins un groupe fonctionnel capable de coordination avec l'ion polyvalent.

21. La composition d'encre de la revendication 20, dans laquelle le groupe fonctionnel comprend au moins un groupe ionique, au moins un groupe ionisable, ou un mélange d'au moins un groupe ionique et d'au moins un groupe ionisable.

22. La composition d'encre de la revendication 20, dans laquelle le groupe fonctionnel comprend au moins un groupe carboxylate, un groupe sulfonate, ou un groupe ammonium.

23. La composition d'encre de la revendication 20, dans laquelle le polymère est sélectionné à partir du groupe se composant de: acide polyacrylique, acide polyméthacrylique, copolymères de l'acide acrylique, copolymères de l'acide méthacrylique, copolymères de l'acide maléïque, et sels de ceux-ci.

24. La composition d'encre de la revendication 1, dans laquelle le polymère est un polymère de styrène-acrylate ou un polymère de styrène-acide maléique.

25. La composition d'encre de la revendication 1, dans laquelle le groupe fonctionnel est cet au moins un polymère.

26. Un procédé de formation d'une image comprenant les étapes de: 1) incorporer dans un appareil d'impression une composition d'encre comprenant un véhicule liquide, au moins un pigment modifié comprenant un pigment auquel est fixé au moins un groupe fonctionnel, où ledit groupe fonctionnel comprend au moins un groupe organique, au moins un sel avec un ion polyvalent, et au moins un polymère, et 2) produire une image sur un substrat, où ledit groupe fonctionnel est capable de coordination avec ledit ion polyvalent et est anionique lorsque le sel comprend un cation polyvalent et est cationique lorsque le sel comprend un anion polyvalent.

27. Le procédé de la revendication 26, dans lequel le véhicule liquide est un véhicule aqueux.

28. Le procédé de la revendication 26, dans lequel le véhicule liquide est un véhicule non aqueux.

29. Le procédé de la revendication 26, dans lequel le procédé est un procédé d'impression d'encre à jet d'encre.
